# EUROPEAN PATENT APPLICATION

(11) **EP 4 050 040 A1**
(43) Date of publication of application: **31.08.2022**
(21) Application number: 21159713.3
(22) Date of filing: 26.02.2021
(51) Int. Cl.: C08F 4/34, C08F 290/06, C09J 4/06

(54) **ONE COMPONENT (1K) CURABLE ADHESIVE COMPOSITION**

(71) Applicant: Henkel AG & Co. KGaA, 40589 Düsseldorf (DE)
(72) Inventor: Stapf, Stefanie, 45239 Essen (DE); Sundermeier, Uta, 42799 Leichlingen (DE); Brunstedt, Benjamin, 40597 Düsseldorf (DE); Kamm, Thomas, 51371 Leverkusen (DE)

(57) **Abstract**

The present invention is directed to a curable and electrochemically debondable one-component (1K) adhesive composition comprising, based on the weight of the composition:
from 40 to 90 wt.% of i) at least one ethylenically unsaturated non-ionic monomer;
from 1 to 30 wt.% of ii) non-polymerizable electrolyte;
from 0.1 to 10 wt.% of iii) at least one radical generating thermal initiator;
from 0 to 20 wt.% of iv) filler; and,
from 0 to 20 wt.% of v) toughener.

## Description

### FIELD OF THE INVENTION

The present invention is directed to an adhesive composition which can be debonded from particular substrates to which it is applied. More particularly, the present invention is directed to a one-component (1K) curable and electrochemically debondable adhesive composition based on (meth)acrylate monomers.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature - such as disclosed in US Patent No. 4,171,240 (Wong) and US Patent No. 4,729,797 (Linde et al.) - might be effective but can be time consuming and complex to perform: moreover, the aggressive chemicals and / or harsh conditions required can damage the substrates being separated, rendering them unsuitable for subsequent applications.

Noting these problems, certain authors have sought to develop electrochemically debondable adhesive compositions, wherein the passage of an electrical current through the cured compositions acts to disrupt the bonding at the interface of the adhesive and the substrate.

WO2007/142600 (Stora Enso AB) describes an electrochemically weakened adhesive composition which provides an adhesive bond to an electrically conducting surface and sufficient ion conductive properties to enable a weakening of said adhesive bond at the application of a voltage across the adhesive composition, wherein said composition comprises at least one ionic compound in an effective amount to give said ion conductive properties and wherein said ionic compound has a melting point of no more than 120°C.

EP 3363875 A (Nitto Denko Corporation) provides an electrically peelable adhesive composition that forms an adhesive layer which has high adhesion and can be easily peeled off upon application of a voltage for a short time. The electrically peelable adhesive composition of the invention includes a polymer and from 0.5 to 30 wt.%, based on the weight of the polymer, of an ionic liquid, wherein the anion of the ionic liquid is a bis(fluorosulfonyl)imide anion.

WO2017/133864 (Henkel AG & Co. KGaA) describes a method for reversibly bonding a first and a second substrate, wherein at least the first substrate is an electrically non-conductive substrate, the method comprising: a) coating the surface of the electrically non-conductive substrate(s) with a conductive ink; b) applying an electrically debondable hot melt adhesive composition to the conductive ink-coated surface of the first substrate and / or the second substrate; c) contacting the first and the second substrates such that the electrically debondable hot melt adhesive composition is interposed between the two substrates; d) allowing formation of an adhesive bond between the two substrates to provide bonded substrates; and, e) applying a voltage to the bonded substrates whereby adhesion at an interface between the electrically debondable hot melt adhesive composition and a substrate surface is substantially weakened.

WO2013/135677 (Henkel AG & Co. KGaA) describes a hot melt adhesive containing: from 20 to 90 wt % of at least one polyamide having a molecular weight (Mw) from 10,000 to 250,000 g/mol; from 1 to 25 wt % of at least one organic or inorganic salt; and, from 0 to 60 wt % of further additives, wherein the adhesive has a softening point from 100°C to 220°C.

US 2007/0269659 (Gilbert) describes an adhesive composition disbondable at two interfaces, the composition: (i) comprising a polymer and an electrolyte; (ii) facilitating joinder of two surfaces; and, (iii) in response to a voltage applied across both surfaces so as to form an anodic interface and a cathodic interface, disbonding from both the anodic and cathodic surfaces.

US 2008/0196828 (Gilbert) describes a hot-melt adhesive composition comprising: a thermoplastic component; and, an electrolyte, wherein the electrolyte provides sufficient ionic conductivity to the composition to enable a faradaic reaction at a bond formed between the composition and an electrically conductive surface and to allow the composition to disbond from the surface.

US Patent No. 7,465,492 (Gilbert) describes an electrochemically disbondable composition comprising: a matrix functionality comprising a monomer selected from the group consisting of acrylics, methacrylics and combinations thereof; a free radical initiator; and, an electrolyte, wherein the electrolyte provides sufficient ionic conductivity to said composition to support a faradaic reaction at a bond formed between the composition and an electrically conductive surface and thus allows the composition to disbond from the surface. In this citation, the electrolyte comprises a salt which is capable of being solvated into the composition and which is a member of the group consisting of the ammonium (NH₄⁺), alkali metal, alkali earth or rare earth salts of perchlorate, tetrafluoroborate, hexafluorophosphate, triflate and triflimide anions.

There remains a need in the art to provide a curable one component (1K) adhesive composition which can be conveniently applied to the surfaces of substrates to be bonded, which upon curing thereof can provide an effective bond within composite structures containing said substrates but which can be effectively de-bonded from those substrates by the facile application of an electrical potential across the cured adhesive.

### STATEMENT OF THE INVENTION

In accordance with a first aspect of the invention, there is provided a curable and electrochemically debondable one-component (1K) adhesive composition comprising, based on the weight of the composition:
from 40 to 90 wt.%, preferably 60 to 90 wt.% and more preferably from 70 to 90 wt.% of i) at least one ethylenically unsaturated non-ionic monomer;
from 0.1 to 30 wt.%, preferably from 1 to 20 wt.% of ii) non-polymerizable electrolyte;
from 0.1 to 10 wt.%, preferably from 0.1 to 5 wt.% of iii) at least one radical generating thermal initiator;
from 0 to 20 wt.%, preferably from 0.5 to 10 wt.% of iv) filler; and,
from 0 to 20 wt.%, preferably from 0.5 to 20 wt.%, more preferably from 0.5 to 15 wt.% of v) toughener.

In particular embodiments of the composition, (meth)acrylate monomers constitute at least 60 mole % and preferably at least 75 mole %, of the total molar amount of ethylenically unsaturated non-ionic monomers. It is preferred that said (meth)acrylate monomers comprise C₁-C₆ hydroxyalkyl esters of (meth)acrylic acid. Independently of or supplementary to this statement of preference, it is preferred that said (meth)acrylate monomers comprise one or more oligomers selected from the group consisting of urethane (meth)acrylates, polyester (meth)acrylates and polyether (meth)acrylates. A particular preference for the inclusion of at least one urethane (meth) acrylate oligomer in the composition might be mentioned.

Whilst a multiplicity of electrolytes will be discussed herein as being suitable, good results have been obtained where said electrolyte is selected from the group consisting of 1-ethyl-3-methyl-1H-imidazol-3-um methansulfonate, 1-ethyl-3-methylimidazolium trifluoromethanesulfonate, 1-ethyl-3-methyl-1H-imidazol-3-um methyl sulphate and mixtures thereof.

The composition of the present invention may, in important embodiments, contain at least one of iv) said filler or v) said toughener. The presence of both filler and toughener can, for instance, promote the adhesiveness of the composition to substrate surfaces.

In accordance with a second aspect of the invention, there is provided a bonded structure comprising:
a first material layer having an electrically conductive surface; and,
a second material layer having an electrically conductive surface,
wherein the cured electrochemically debondable one-component (1K) adhesive composition as defined hereinabove and in the appended claims is disposed between said first and second material layers.

In accordance with a third aspect of the present invention, there is provided a method of debonding said bonded structure as defined hereinabove and in the appended claims, the method comprising the steps of:
i) applying a voltage across both surfaces to form an anodic interface and a cathodic interface; and,
ii) debonding the surfaces.

Step i) of this method is preferably characterized by at least one of:
a) an applied voltage of from 0.5 to 200 V; and,
b) the voltage being applied for a duration of from 1 second to 60 minutes.

The adhesive property of the composition is disrupted by the application of an electrical potential across the bond line between that composition and the conductive surfaces. Without intention to be bound by theory, it is considered that the faradaic reactions which take place at the interface between the adhesive composition and the conductive surfaces disrupt the interaction between the adhesive and the substrate, thereby weakening the bond therebetween. That interfacial disruption may be the consequence of one or more processes, for instance chemical degradation of the debondable material, gas evolution at the interface and / or material embrittlement though changes to the crosslink density of the adhesive composition.

### DEFINITIONS

As used herein, the singular forms "*a*"*,* "*an*" and "*the*" include plural referents unless the context clearly dictates otherwise.

The terms "*comprising*"*,* "*comprises*" and "*comprised o*f" as used herein are synonymous with "*including*"*,* "*includes*"*,* "*containing*" or "*contains*"*,* and are inclusive or open-ended and do not exclude additional, non-recited members, elements or method steps.

As used herein, the term "*consisting of*" excludes any element, ingredient, member or method step not specified.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to* x" specifically includes 0 wt.%: the ingredient defined by said range may be absent from the composition or may be present in the composition in an amount up to x wt.%.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature is 23°C plus or minus 2°C.

The molecular weights referred to in this specification - to describe to macromolecular, oligomeric and polymeric components of the curable compositions - can be measured with gel permeation chromatography (GPC) using polystyrene calibration standards, such as is done according to ASTM 3536.

Viscosities of the compositions described herein are, unless otherwise stipulated, measured using the Brookfield Viscometer at standard conditions of 20°C and 50% Relative Humidity (RH). The method of calibration, the spindle type and rotation speed of the Brookfield Viscometer are chosen according to the instructions of the manufacturer as appropriate for the composition to be measured. As used herein the term *"electrochemically debondable"* means that, after curing of the adhesive, the bond strength can be weakened by at least 50% upon application of an electrical potential of 30V for a duration of 20 minutes. The cured adhesive is applied between two substrates which are bonded by said adhesive so that an electric current is running through the adhesive bond line. Bond strength is measured by Tensile Lap Shear (TLS) test performed at room temperature and based upon ASTM D3163-01 Standard Test Method for Determining Strength of Adhesively Bonded Rigid Plastic Lap-Shear Joints in Shear by Tension Loading. The bond overlapping area was 2.5 cm x 1.0 cm (1" x 0.4") with a bond thickness of 0.15 cm (60 mil).

As used herein, the term "monomer" refers to a substance that can undergo a polymerization reaction to contribute constitutional units to the chemical structure of a polymer. The term *"monofunctional",* as used herein, refers to the possession of one polymerizable moiety. The term *"polyfunctional",* as used herein, refers to the possession of more than one polymerizable moiety.

The term "*electrolyte*" is used herein in accordance with its standard meaning in the art as a substance containing free ions which can conduct electricity by displacement of charged carrier species. The term is intended to encompass molten electrolytes, liquid electrolytes, semi-solid electrolytes and solid electrolytes wherein at least one of the cationic or anionic components of their electrolyte structure is essentially free for displacement, thus acting as charge carrier.

The curable adhesive compositions of the present invention and the cured adhesives obtained therefrom possess "*electrolyte functionality*" in that the adhesive material permits the conduction of ions, either anions, cations or both. The electrolyte functionality is understood to derive from the ability of the compositions and cured adhesives to solvate ions of at least one polarity.

The term "*faradaic reaction*" means an electrochemical reaction in which a material is oxidized or reduced.

As used herein, "*(meth)acryl*" is a shorthand term referring to "*acryl*" and/or "*methacryl*"*.* Thus the term "*(meth)acrylate*" refers collectively to acrylate and methacrylate.

As used herein, "*C₁-Cₙ alkyl"* group refers to a monovalent group that contains 1 to n carbons atoms, that is a radical of an alkane and includes straight-chain and branched organic groups. As such, a *"C₁-C₁₈ alkyl"* group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term "*C₁-C₁₈hydroxyalkyl*" as used herein refers to a HO-(alkyl) group having from 1 to 18 carbon atoms, where the point of attachment of the substituent is through the oxygen-atom and the alkyl group is as defined above.

An "*alkoxy group*" refers to a monovalent group represented by -OA where A is an alkyl group: non-limiting examples thereof are a methoxy group, an ethoxy group and an iso-propyloxy group. The term "*C₁-C₁₈ alkoxyalkyl*" as used herein refers to an alkyl group having an alkoxy substituent as defined above and wherein the moiety (*alkyl-O-alkyl*) comprises in total from 1 to 18 carbon atoms: such groups include methoxymethyl (-CH₂OCH₃), 2-methoxyethyl (-CH₂CH₂OCH₃) and 2-ethoxyethyl.

The term "*C₂-C₄ alkylene"* as used herein, is defined as saturated, divalent hydrocarbon radical having from 2 to 4 carbon atoms.

The term "*C₃*-*C₁₈ cycloalkyl"* is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, an "*C₆-C₁₈ aryl"* group used alone or as part of a larger moiety - as in "*aralkyl group*" - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, "*C₂-C₂₄ alkenyl"* refers to hydrocarbyl groups having from 2 to 24 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "E" and "Z" configurations, as appreciated by those of ordinary skill in the art. In general, however, a preference for unsubstituted alkenyl groups containing from 2 to 10 (C₂₋₁₀) or 2 to 8 (C₂₋₈) carbon atoms should be noted. Examples of said C₂-C₁₂ alkenyl groups include, but are not limited to: -CH=CH₂; -CH=CHCH₃; —CH₂CH=CH₂; -C(=CH₂)(CH₃); - CH=CHCH₂CH₃; -CH₂CH=CHCH₃; -CH₂CH₂CH=CH₂; -CH=C(CH₃)₂; -CH₂C(=CH₂)(CH₃); - C(=CH₂)CH₂CH₃; -C(CH₃)=CHCH₃; -C(CH₃)CH=CH₂; -CH=CHCH₂CH₂CH₃; - CH₂CH=CHCH₂CH₃, -CH₂CH₂CH=CHCH₃; -CH₂CH₂CH₂CH=CH₂; -C(=CH₂)CH₂CH₂CH₃; - C(CH₃)=CHCH₂CH₃; -CH(CH₃)CH=CHCH, -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, *"alkylaryl"* refers to alkyl-substituted aryl groups and "*substituted alkylaryl*" refers to alkylaryl groups further bearing one or more substituents such as halo, nitro, cyano, amido, amino, sulfonyl, sulfinyl, sulfanyl, sulfoxy, urea, thiourea, sulfamoyl, sulfamide and hydroxy. Further, as used herein "*aralkyl*" means an alkyl group substituted with an aryl radical as defined above.

The term "*hetero*" as used herein refers to groups or moieties containing one or more heteroatoms, such as N, O, Si and S. Thus, for example "*heterocyclic*" refers to cyclic groups having, for example, N, O, Si or S as part of the ring structure. "*Heteroalkyl*"*,* "*heterocycloalkyl*" and *"heteroaryl"* moieties are alkyl, cycloalkyl and aryl groups as defined hereinabove, respectively, containing N, O, Si or S as part of their structure.

The present compositions may be defined herein as being "*substantially free*" of certain compounds, elements, ions or other like components. The term "*substantially free*" is intended to mean that the compound, element, ion or other like component is not deliberately added to the composition and is present, at most, in only trace amounts which will have no (adverse) effect on the desired properties of the coating. An exemplary trace amount is less than 1000 ppm by weight of the composition. The term "*substantially free*" encompasses those embodiments where the specified compound, element, ion, or other like component is completely absent from the composition or is not present in any amount measurable by techniques generally used in the art.

### DETAILED DESCRIPTION OF THE INVENTION

### 1. Non-Ionic Matrix Monomers

The composition of the present invention comprises from 40 to 90 wt.%, based on the weight of said composition, of at least one ethylenically unsaturated non-ionic monomer, the (co-)polymerization of which yields the matrix of the debondable adhesive. It is preferred that the composition comprises from 60 to 90 wt.%, for example from 70 or from 75 to 90 wt.% of said at least one ethylenically unsaturated non-ionic monomer. Such monomers can, in principle, be any ethylenically unsaturated non-ionic monomer. However, the invention is particularly applicable to compositions of which (meth)acrylate monomers constitute at least 60 mole %, preferably at least 75 mole %, of the total molar amount of ethylenically unsaturated non-ionic monomers present.

### 1.1 (Meth)acrylate Monomer

There is no particular intention to limit (meth)acrylate esters having utility herein and it is considered that the (meth)acrylate monomers may be any ester of acrylic acid or methacrylic acid known to the art. That said, exemplary (meth)acrylic monomers include but are not limited to:
- C₁-C₁₈ alkyl esters of (meth)acrylic acid, such as methyl (meth)acrylate, ethyl (meth)acrylate, n-propyl (meth)acrylate, isopropyl (meth)acrylate, butyl (meth)acrylate (all isomers), hexyl (meth)acrylate, n-heptyl(meth)acrylate, n-octyl(meth)acrylate, 2-ethylhexyl (meth)acrylate, n-nonyl(meth)acrylate, n-decyl(meth)acrylate, n-dodecyl(meth)acrylate and n-stearyl(meth)acrylate;
- C₃-C₁₈ cycloalkyl esters of (meth)acrylic acid, such as cyclohexyl(meth)acrylate and isobornyl(meth)acrylate;
- C₆-C₁₈ aryl esters of (meth)acrylic acid, such as phenyl(meth)acrylate and tolyl(meth)acrylate;
- C₇-C₂₄ aralkyl esters of (meth)acrylic acid, such as benzyl(meth)acrylate;
- C₁-C₁₈ alkoxyalkyl esters of (meth)acrylic acid, such as 2-methoxyethyl(meth)acrylate, 2-ethoxyethyl(meth)acrylate and 3-methoxybutyl(meth)acrylate;
- fluorine-containing C₁-C₁₈ alkyl esters of (meth)acrylic acid, such as trifluoromethylmethyl(meth)acrylate, 2-trifluoromethylethyl(meth)acrylate, 2-perfluoroethylethyl(meth)acrylate, 2-perfluoroethyl-2-perfluorobutylethyl(meth)acrylate, 2-perfluoroethyl(meth)acrylate, perfluoromethyl(meth)acrylate, diperfluoromethylmethyl(meth)acrylate, 2-perfluoromethyl-2-perfluoroethylmethyl(meth)acrylate, 2-perfluorohexylethyl(meth)acrylate, 2-perfluorodecylethyl(meth)acrylate and 2-perfluorohexadecylethyl(meth)acrylate;
- C₁-C₁₈ hydroxyalkyl esters of (meth)acrylic acid and in particular C₁-C₆ hydroxyalkyl esters of (meth)acrylic acid, such as 2-hydroxyethyl(meth)acrylate, 2-hydroxypropyl(meth)acrylate and pentaerythritol tri(meth)acrylate;
- di/poly-esters of di/poly-functional alcohols, such as ethylene glycol di(meth)acrylate, 1,3 or 1,4-butanediol di(meth)acrylate, 1,6-hexanediol di(meth)acrylate and trimethylolpropane tri(meth)acrylate;
- C₁-C₁₈ aminoalkyl esters of (meth)acrylic acid, such as 2-aminoethyl(meth)acrylate, dimethylaminoethyl (meth)acrylate and (meth)acryloxyethoxyethylamine;
- C₁-C₁₈ alkoxysilyl-containing alkyl esters of (meth)acrylic acid, such as γ-(methacryloyloxypropyl)trimethoxysilane;
- ethylene oxide or propylene oxide adducts of (meth)acrylic acid; and,
- (meth)acrylate esters formed by alcohols bearing other functional groups, such as tetrahydrofurfuryl (meth)acrylate.

For completeness, it is not precluded that the composition comprises a macro-monomer component consisting of one or more oligomers selected from the group consisting of urethane (meth)acrylates, polyester (meth)acrylates and polyether (meth)acrylates. However, such oligomeric compounds - which may be mono- or polyfunctional with respect to the polymerizable (meth)acrylate functionality but which are based on repeated structural urethane, ester and ether subunits - should not usually constitute more than 30 wt.% of the total of (meth)acrylate monomers in said composition.

As is known in the art, urethane (meth) acrylate oligomers may be prepared by reaction of a polyfunctional (meth)acrylate bearing a hydroxyl group with a polyisocyanate as defined herein above. In particular, the polyfunctional (meth)acrylate bearing a hydroxyl group may be selected from the group consisting of: 2-hydroxyethyl (meth)acrylate; 2-hydroxyisopropyl (meth)acrylate; 4-hydroxybutyl (meth)acrylate; hydroxyethylcaprolactone (meth)acrylate; pentaerythritol tri(meth)acrylate; pentaerythritol tetra(meth)acrylate; dipentaerythritol penta(meth)acrylate; dipentaerythritol hexa(meth)acrylate; and, combinations thereof.

Suitable polyester (meth)acrylate oligomers are obtained by reacting (meth)acrylic acid with a polyester prepared from a polybasic acid or an anhydride thereof and a polyhydric alcohol. Examples of the polybasic acid include, but are not limited to: phthalic acid; succinic acid; adipic acid; glutaric acid; sebacic acid; isosebacic acid; tetrahydrophthalic acid; hexahydrophthalic acid; dimer acid; trimellitic acid; pyromellitic acid; pimelic acid; and, azelaic acid. Examples of the polyhydric alcohol include but are not limited to: 1,6-hexanediol; diethylene glycol; 1,2-propylene glycol; 1,3-butylene glycol; neopentyl glycol; dipropylene glycol; polyethylene glycol; and, polypropylene glycol.

As is known in the art, polyether (meth)acrylate oligomers may be obtained by an ester exchange reaction between a polyether and a (meth)acrylate ester, such as ethyl methacrylate. Exemplary polyethers include polyethers obtained from ethoxylated or propoxylated trimethylolpropane, pentaerythritol or the like, or by polyetherification of 1,4-propanediol or the like.

In preferred embodiment, the composition comprises at least one (meth)acrylate monomer selected from the group consisting of: methyl (meth)acrylate; ethyl (meth)acrylate; n-propyl (meth)acrylate; isopropyl (meth)acrylate; n-butyl(meth)acrylate; isobutyl (meth)acrylate; tert-butyl (meth)acrylate; n-pentyl (meth)acrylate; n-hexyl (meth)acrylate; cyclohexyl (meth)acrylate; n-heptyl (meth)acrylate; n-octyl(meth)acrylate; 2-ethylhexyl-(meth)acrylate; nonyl (meth) acrylate; decyl (meth)acrylate; dodecyl (meth)acrylate; phenyl (meth)acrylate; tolyl (meth)acrylate; benzyl (meth)acrylate; 2-methoxyethyl (meth)acrylate; 3-methoxybutyl (meth)acrylate; 2-hydroxyethyl (meth)acrylate; 2-hydroxypropyl(meth)acrylate; stearyl(meth)acrylate; glycidyl (meth)acrylate; isobornyl (meth)acrylate; 2-aminoethyl (meth)acrylate; y-(meth)acryloyloxypropyl trimethoxysilane; (meth)acrylic acid-ethylene oxide adduct; trifluoromethylmethyl (meth)acrylate; 2-trifluoromethylethyl (meth)acrylate; 2-perfluoro ethylethyl (meth)acrylate; 2-perfluoroethyl-2-perfluorobutylethyl (meth)acrylate; 2-perfluoroethyl (meth)acrylate; perfluoromethyl (meth)acrylate; diperfluoromethylmethyl (meth)acrylate; 2-perfluoromethyl-2-perfluoroethylmethyl (meth)acrylate; 2-perfluorohexylethyl (meth)acrylate; 2-perfluorodecylethyl (meth)acrylate; 2-perfluorohexadecylethyl (meth)acrylate; ethoxylated trimethylolpropane triacrylate; trimethylol propane trimethacrylate; dipentaerythritol monohydroxypentacrylate; pentaerythritol triacrylate; ethoxylated trimethylolpropane triacrylate; 1,6-hexanedioldiacrylate; neopentyl glycoldiacrylate; pentaerythritol tetraacrylate; 1,2-butylene glycoldiacrylate; trimethylopropane ethoxylate tri(meth)acrylate; glyceryl propoxylate tri(meth) acrylate; trimethylolpropane tri(meth)acrylate; dipentaerythritol monohydroxy penta(meth)acrylate; tripropyleneglycol di(meth)acrylate; neopentylglycol propoxylate di(meth)acrylate; 1,4-butanediol di(meth)acrylate; triethyleneglycol di(meth)acrylate; butylene glycol di(meth)acrylate; and, ethoxylated bisphenol A di(meth)acrylate.

Good results have been obtained where the composition comprises at least one (meth)acrylate monomer selected from the group consisting of C₁-C₆ hydroxyalkyl esters of (meth)acrylic acid.

### 1.2 Co-Polymerizable Acid

As noted above, the composition may optionally comprise at least one co-polymerizable acid. When employed, said acid(s) may be added in an amount up to 40 mole %, for instance up to 20 mole % of the total molar amount of ethylenically unsaturated non-ionic monomers present. For instance, said at least one co-polymerizable acid may constitute from 0 to 15 mole % of the total molar amount of ethylenically unsaturated non-ionic monomers. For completeness, whilst such monomers should typically be used in the form of free acid, it is not precluded that the constituent acid groups of the monomers be partially or completely neutralized with suitable bases, provided this does not compromise their participation in co-polymerization.

Without intention to limit the present invention, co-polymerizable acid monomers should be selected from: ethylenically unsaturated carboxylic acids; ethylenically unsaturated sulfonic acids; and vinylphosphonic acid. Suitable ethylenically unsaturated sulfonic acids are, for instance, vinylsulfonic acid, styrenesulfonic acid and acrylamidomethylpropanesulfonic acid.

Preferably said at least one co-polymerizable acid of the composition comprises or consists of ethylenically unsaturated carboxylic acids selected from the group consisting of: α,β-monoethylenically unsaturated monocarboxylic acids; α,β-monoethytenically unsaturated dicarboxylic acids; C₁-C₆ alkyl half-esters of α,β-monoethytenically unsaturated dicarboxylic acids; α,β-monoethytenically unsaturated tricarboxylic acids; and, C₁-C₆ alkyl esters of α,β-monoethylenically unsaturated tricarboxylic acids bearing at least one free carboxylic acid group; and, mixtures thereof. In particular, said at least one co-polymerizable acid of the composition comprises or consists of ethylenically unsaturated carboxylic acids selected from the group consisting of: methacrylic acid; acrylic acid, itaconic acid; maleic acid; aconitic acid; crotonic acid; fumaric acid; and, mixtures thereof.

### 1.3 Further Monomers

It is noted that the present invention does not preclude the presence in the composition of vinyl monomers which can be copolymerized with (meth)acrylate monomers and which are selected from the group consisting of: styrene monomers, such as styrene, vinyltoluene, α-methylstyrene and chlorostyrene; fluorine containing vinyl monomers, such as perfluoroethylene, perfluoropropylene and fluorinated vinylidene; silicon containing vinyl monomers such as vinyltrimethoxysilane and vinyltriethoxysilane; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group containing vinyl monomers, such as acrylonitrile and methacrylonitrile; amide group containing vinyl monomers, such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; and vinyl chloride, vinylidene chloride, allyl chloride and allylalcohol.

### 2. Non-Polymerizable Electrolyte

The composition comprises from 0.1 to 30 wt.%, based on the weight of the composition, of non-polymerizable electrolyte: said non-polymerizable electrolyte may preferably constitute from 1 to 20 wt.%, for example from 1 to 15 wt.% of the composition.

The non-polymerizable electrolyte preferably comprises at least one salt having a Formula selected from the group consisting of: 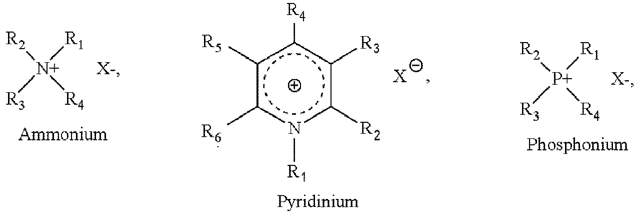 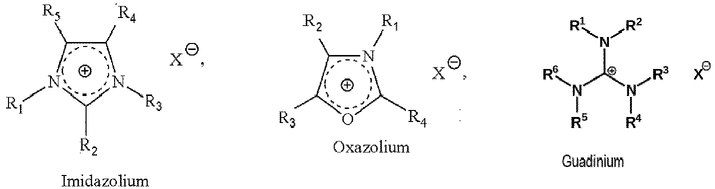 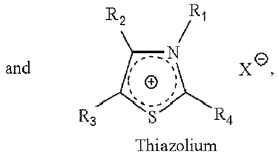 wherein: R¹, R², R³, R⁴, R⁵ and R⁶ are independently selected from hydrogen, C₁-C₁₈ alkyl, C₃-C₁₈ cycloalkyl, C₆-C₁₈ aryl, C₇-C₂₄ aralkyl, C₂-C₂₀ alkenyl, -C(O)R^{q}, -C(O)OH, -CN and -NO₂; and,
R^{q} is C₁-C₆ alkyl.

Where an ammonium salt is used, it may be subject to the proviso that at most three and desirably at most two of the groups R¹ to R⁴ may be hydrogen.

For completeness, the terms C₁-C₁₈ alkyl, C₃-C₁₈ cycloalkyl, C₆-C₁₈ aryl, C₇-C₂₄ aralkyl, C₂-C₂₀ alkenyl expressly includes groups wherein one or more hydrogen atoms are substituted by halogen atoms (e.g. C₁-C₁₈ haloalkyl) or hydroxyl groups (e.g. C₁-C₁₈ hydroxyalkyl). In particular, it is preferred that R¹, R², R³, R⁴, R⁵ and R⁶ are independently selected from hydrogen, C₁-C₁₂ alkyl, C₁-C₁₂ haloalkyl, C₁-C₁₂ hydroxyalkyl and C₃-C₁₂ cycloalkyl. For example, R¹, R², R³, R⁴, R⁵ and R⁶ may be independently selected from hydrogen, C₁-C₆ alkyl, C₁-C₆ haloalkyl and C₁-C₆ hydroxyalkyl.

There is no particular intention to limit the counter anion (X-) which may be employed in the non-polymerizable electrolyte. Exemplary anions may be selected from:
- Halides;
- Pseudohalides and halogen-containing compounds of the formulae PF₆⁻, CF₃SO₃⁻, (CF₃SO₃)₂N⁻, CF₃CO₂⁻ and CCl₃CO₂⁻,
- CN⁻, SCN⁻ and OCN⁻;
- Phenates;
- Sulfates, sulfites and sulfonates of the general formulae SO₄²⁻, HSO₄⁻, SO₃²⁻, HSO₃⁻, R^{a}OSO₃⁻ and R^{a}SO₃⁻;
- Phosphates of the general formulae PO₄³⁻, HPO₄²⁻, H₂PO₄⁻, R^{a}PO₄²⁻, HR^{a}PO₄⁻ and R^{a}R^{b}PO₄⁻;
- Phosphonates and phosphinates of the general formulae R^{a}HPO₃⁻,R^{a}R^{b}PO₂⁻ and R^{a}R^{b}PO₃⁻;
- Phosphites of the general formulae: PO₃³⁻, HPO₃²⁻, H₂PO₃⁻, R^{a}PO₃²⁻, R^{a}HPO₃⁻ and R^{a}R^{b}PO₃⁻;
- Phosphonites and phosphinites of the general formulae R^{a}R^{b}PO₂⁻, R^{a}HPO₂⁻, R^{a}R^{b}PO⁻ and R^{a}HPO⁻;
- Carboxylic acid anions of the general formula R^{a}COO⁻;
- Hydroxycarboxylic acids anions and sugar acid anions;
- Saccharinates (salts of o-benzoic acid sulfimide);
- Borates of the general formulae BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)⁻ and B(R^{a}SO₄)⁻;
- Boronates of the general formulae R^{a}BO₂²⁻ and R^{a}R^{b}BO⁻;
- Carbonates and carbonic acid esters of the general formulae HCO₃⁻, CO₃²⁻ and R^{a}CO₃⁻;
- Silicates and silicic acid esters of the general formulae SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻ and HR^{a}R^{b}SiO₄⁻;
- Alkyl- and arylsilanolates of the general formulae R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻ and R^{a}R^{b}SiO₃²⁻;
- Pyridinates and pyrimidinates;
- Carboxylic acid imides, bis(sulfonyl)imides and sulfonylimides of the general formulae: 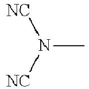 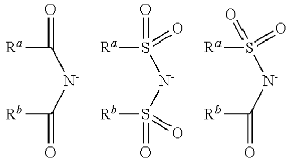
- Methides of the general formula: 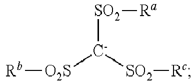
- Alkoxides and aryloxides of the general formula R^{a}O⁻; and,
- Sulfides, hydrogen sulfides, polysulfides, hydrogen polysulfides and thiolates of the general formulae S²⁻, HS⁻, [Sᵥ]²⁻, [HSᵥ]⁻ and [R^{a}S]⁻
in which general formulae
v is a whole positive number of from 2 to 10.
R^{a}, R^{b}, R^{c} and R^{d} are independently selected from hydrogen, a C₁-C₁₂ alkyl, C₅-C₁₂ cycloalkyl, C₅-C₁₂ heterocycloalkyl, C₆-C₁₈ aryl and C₅-C₁₈ heteroaryl.

Based on the definitions in the above list, preferred anions are selected from the group consisting of: halides; pseudohalides and halogen-containing compounds as defined above; carboxylic acid anions, in particular formate, acetate, propionate, butyrate and octanoate; hydroxycarboxylic acid anions, such as lactate; pyridinates and pyrimidinates; carboxylic acid imides, bis(sulfonyl)imides and sulfonylimides; sulfates, in particular methyl sulfate and ethyl sulfate; sulfites; sulfonates, in particular methanesulfonate; and, phosphates, in particular dimethyl-phosphate, diethyl-phosphate and di-(2-ethylhexyl)-phosphate.

The non-polymerizable electrolyte of the composition is preferably selected from the group consisting of 1-ethyl-3-methyl-1H-imidazol-3-um methanesulfonate, 1-ethyl-3-methyl-1H-imidazol-3-um methyl sulfate, 1-hexyl-3-methylimidazolium 2-(2-fluoroanilino)-pyridinate, 1-hexyl-3-methylimidazolium imide, 1-butyl-1-methyl- pyrrolidinium 2-(2-fluoroanilino)-pyridinate, 1-butyl-1- methyl-pyrrolidinium imide, trihexyl (tetradecyl) phospholium 2-(2-fluoroanilino)-pyridinate, cyclohexyltrimethylammonium bis (trifluormethylsulfonyl) imide, di(2-hydroxyethyl) ammonium trifluoroacetate, N,N-dimethyl (2-hydroxyethyl) ammonium octanoate, methyltrioctylammonium bis (trifluoromethylsulfonyl) imide, N-ethyl-N-N-N-N-tetramethylguanidinium trifluoromethanesulfonate, guanidinium trifluoromethanesulfonate, 1-butyl-4-methylpyridinium bromide, 1-butyl-3-methylpyridinium tetrafluoroborate, 1-butyl-3-hydroxymethylpyridinium ethylsulfate, 1-butyl-1-methylpyrrolidinium bis (trifluoromethylsulfonyl) imide, 1-butyl-methylpyrrolidinium tris (pentafluoroethyl) trifluorophosphate, 3-methyl imidazolium ethylsulfate, 1-ethyl-3-methylimidazolium chloride, 1-ethyl-3-ethyl-methylimidazolium bromide, 1-butyl-3-methylimidazolium chloride, 1-hexyl-3-methylimidazolium chloride, 1-octyl-3-methylimidazolium chloride, 1-methyl-3-octylimidazolium chloride, 1-propyl-3-methylimidazolium iodide, 1-butyl-3-methylimidazolium tetrafluoroborate, 1-butyl-3-methylimidazolium trifluoromethanesulfonate, 1-butyl-3-methylimidazolium hexafluorophosphate, 1-ethyl-3-methylimidazolium trifluoromethanesulfonate, 1-butyl-2,3-dimethylimidazolium tetrafluoroborate, 1-butyl-2,3-dimethylimidazolium hexafluorophosphate, 1-butylimidazol, 1-methylimidazolium tetrafluoroborate, tetrabutylphosphonium tris (pentafluoroethyl) trifluorophosphate, trihexyl (tetradecyl) phosphonium tetrafluoroborate and mixtures thereof. A particular preference for the use of at least one of 1-ethyl-3-methylimidazolium chloride, 1-ethyl-3-methyl-1H-imidazol-3-um methanesulfonate, 1-ethyl-3-methylimidazolium trifluoromethanesulfonate and 1-ethyl-3-methyl-1H-imidazol-3-um methyl sulfate may be mentioned.

### 3. Thermal Initiator

The composition of the present invention includes at least one radical generating thermal initiator. As will be understood by a person skilled in the art, a thermal initiator is a compound which can be activated by thermal energy to generate a radical thereof upon, for instance, heating or irradiation of the infrared or microwave wavelength regions. The present composition should conventionally comprise from 0.1 to 10 wt.%, for example from 0.1 to 5 wt.% or from 0.1 to 2.5 wt.%, of said at least one radical generating thermal initiator, based on the total weight of the composition.

Without intention to limit the present invention, an exemplary class of radical generating thermal initiators suitable for use herein are organic peroxides, selected for example from: cyclic peroxides; diacyl peroxides; dialkyl peroxides; hydroperoxides; peroxycarbonates; peroxydicarbonates; peroxyesters; and peroxyketals.

While certain peroxides - such as dialkyl peroxides - have been disclosed as useful initiators in *inter alia* US Patent No. 3,419,512 (Lees) and US Patent No. 3,479,246 (Stapleton) and indeed may have utility herein, hydroperoxides represent a preferred class of initiator for the present invention. Further, whilst hydrogen peroxide itself may be used, the most desirable polymerization initiators are the organic hydroperoxides. For completeness, included within the definition of hydroperoxides are materials such as organic peroxides or organic peresters which decompose or hydrolyze to form organic hydroperoxides *in situ*: examples of such peroxides and peresters are cyclohexyl and hydroxycyclohexyl peroxide and t-butyl perbenzoate, respectively.

In an embodiment of the invention, the radical generating thermal initiator comprises or consists of at least one hydroperoxide compound represented by the formula:

R^{p}OOH

wherein: R^{p} is an aliphatic or aromatic group containing up to 18 carbon atoms, and
preferably wherein: R^{p} is a C₁-C₁₂ alkyl, C₆-C₁₈ aryl or C₇-C₁₈ aralkyl group.

As exemplary peroxide initiators, which may be used alone or in combination, there may be mentioned: cumene hydroperoxide (CHP); para-menthane hydroperoxide; t-butyl hydroperoxide (TBH); t-butyl perbenzoate; t-butyl peroxy pivalate; di-t-butyl peroxide; t-butyl peroxy acetate; t-butyl peroxy-2-hexanoate; t-amyl hydroperoxide; 1,2,3,4-tetramethylbutyl hydroperoxide; benzoyl peroxide; dibenzoyl peroxide; 1,3-bis(t-butylperoxyisopropyl) benzene; diacetyl peroxide; butyl 4,4-bis (t-butylperoxy) valerate; p-chlorobenzoyl peroxide; t-butyl cumyl peroxide; di-t-butyl peroxide; dicumyl peroxide; 2,5-dimethyl-2,5-di-t-butylperoxyhexane; 2,5-dimethyl-2,5-di-t-butyl-peroxyhex-3-yne; and, 4-methyl-2,2-di-t-butylperoxypentane.

Without intention to limit the present invention, a further exemplary class of radical generating thermal initiators suitable for use herein are azo polymerization initiators, selected for example from: azo nitriles; azo esters; azo amides; azo amidines; azo imidazoline; and, macro azo initiators.
As representative examples of suitable azo polymerization initiators may be mentioned: 2,2'-azobis (2-methylbutyronitrile); 2,2'-azobis(isobutyronitrile); 2,2'-azobis(2,4-dimethylvaleronitrile); 2,2'-azobis(4-methoxy-2,4-dimethylvaleronitrile); 1,1'-azobis(cyclohexane-1-carbonitrile); 4,4'-azobis(4-cyanovaleric acid); dimethyl 2,2'-azobis(2-methylpropionate); 2,2'-azobis[2-methyl-N-(2-hydroxyethyl)propionamide]; 2,2'-azobis (N-butyl-2-methylpropionamide); 2,2'-azobis[2-(2-imidazolin-2-yl)propane]dihydrochloride; 2,2'-azobis[2-(2-imidazolin-2-yl)propane]; 2,2'-azobis(2-methylpropionamidine)dihydrochloride; 2,2'-azobis[N-(2-carboxyethyl)-2-methylpropionamidine]tetrahydrate; 4,4-azobis(4-cyanovaleric acid), polymer with alpha, omega-bis(3-aminopropyl)polydimethylsiloxane (VPS-1001, available from Wako Pure Chemical Industries, Ltd.); and, 4,4'-azobis(4-cyanopentanoicacic)·polyethyleneglycol polymer (VPE-0201, available from Wako Pure Chemical Industries, Ltd.).

### 4. Cure Accelerator

The present composition may comprise, by weight of the composition, from 0 to 5 wt.%, preferably from 0.1 to 2.5 wt.%, of at least one cure accelerator. Non-limiting examples of useful cure accelerators, which may be present in the composition alone or in combination, include:
(i) arylamines of the general formula: 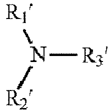
   in which: R₁' is an optionally substituted aryl radical, in particular an optionally alkyl-substituted phenyl radical;
   R₂' has the same meaning as R₁' or is an optionally substituted, linear or branched alkyl radical;
   R₃' is a linear or branched alkyl radical which may be substituted, but contains at least one hydrogen atom in the alpha-position to the nitrogen; and,
   any two of R₁' to R₃' may together form a mono- or poly-cyclic ring structure, which may optionally be a fused ring structure, and which in turn may be substituted;
(ii) compounds having the general formula: 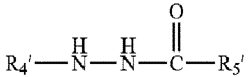
   wherein: R_{4'} is phenyl substituted with C₁-C₄ alkyl group; and,
   R₅' is selected from hydrogen, alkyl, cycloalkyl, alkenyl, cycloalkenyl, aryl, alkoxy, aryloxy, carbonyl, amino and the following groups: 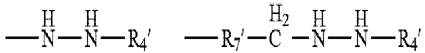
   in which R₇' is selected from alkyl groups containing one to 10 carbon atoms;
(iii) sulphonyl hydrazines; or
(iv) hydropyridines.

Specific non-limiting examples of further cure accelerators include: saccharin; toluidines such as N,N-diethyl-p-toluidine (DE-p-T) and N,N-dimethyl-o-toluidine (DM-o-T); acetyl phenylhydrazine (APH); and, maleic acid. Further exemplary cure accelerators include: sulfinimides and oxygen and sulfur derivatives thereof such as described in US Patent No. 6,958,368 (Klemarczyk); phenylgycines and derivatives thereof; 1,4-aminobenzoyl compounds; phenyl pyrazolinones, sulfonimide derivatives and sulfonamide derivatives as disclosed in US Patent No. 7,411,025 (Messana); trithiadiazapentalenes as described in US Patent No.6,583,289 (McCardle); the reaction product of succinic anhydride and phenyl hydrazine (SPH) which can be prepared according to US Patent No. 6,835,782 (Morita); and, compounds including the -C(=O)-NH-NH- linkage together with an organic acid functional group on the same molecule, as disclosed in US Patent No.6,835,762 (Klemarczyk).

### 5. Solubilizer

The compositions of the present invention may optionally comprise a solubilizer. The compositions may, for instance, contain from 0 to 10 wt.% or from 0 to 5 wt.% of solubilizer, based on the weight of the composition. The solubilizer has the function of promoting the miscibility of the electrolyte ii) within the adhesive composition: the solubilizer may or may not form part of the polymer matrix formed upon curing of the adhesive composition but does serve to facilitate ion transfer therein. The solubilizer is, as such, preferably a polar compound and should desirably be liquid at room temperature.

Suitable classes of solubilizer include: polyphosphazenes; polymethylenesulfides; polyoxyalkylene glycols; polyethylene imines; silicone surfactants, such as polyalkylsiloxane and polyoxyalkylene modified polydimethylsiloxanes including but not limited to poly(C2-C3)oxyalkylene modified polydimethylsiloxanes; co-polymers of functionalized polyalkysiloxanes and epoxy resins, such as copolymers of polydimethylsiloxane (PDMS) and epoxy resin; polyhydric alcohols; and, sugars. For completeness, fluorinated silicone surfactants, such as fluorinated polysilanes, are intended to be encompassed within the term silicone surfactants.

Polyhydric alcohols and sugars such as ethylene glycol, 1,3-propanediol, cyclohexandiol, hydroquinone, catechol, resorcinol, phloroglucinol, pyrogallol, hydroxyhydroquinone, tris(hydroxymethyl)benzene, tris(hydroxymethyl)benzene with three methyl or ethyl substituents bonded to the remaining benzene carbon atoms, isosorbide, isomannide, isoidide, glycerol, cyclohexane-1,2,4-triol, 1,3,5-cyclohexanetriol, pentane-1,2,3-triol, hexane-1,3,5-triol, erythritol, 1,2,4,5-tetrahydroxybenzene, threitol, arabitol, xylitol, ribitol, mannitol, sorbitol, inositol, fructose, glucose, mannose, lactose, 1,1,1-tris(hydroxymethyl)propane, 1,1,1-tris(hydroxymethyl)ethane, di(trimethylolpropane), trimethylolpropane ethoxylate, 2-hydroxymethyl-1,3-propanediol, pentaerythritol allyl ether and pentaerythritol.

Of the polyoxyalkylene glycols, a particular preference for the use of polyoxy(C₂-C₃)alkylene glycols having an average molecular weight (Mw) of from 200 to 10000 g/mol, for example 200 to 2000 g/mol, may be noted. For completeness, the term polyoxy(C₂-C₃)alkylene refers to polyether radicals derived from ethyleneoxide, propyleneoxide or both ethyleneoxide and propyleneoxide.

### Additives and Adjunct Ingredients

Said compositions obtained in the present invention will typically further comprise adjuvants and additives that can impart improved properties to these compositions. For instance, the adjuvants and additives may impart one or more of: improved elastic properties; improved elastic recovery; longer enabled processing time; faster curing time; and lower residual tack. Included among such adjuvants and additives are: tougheners; electrically conductive particles; electrically non-conductive fillers; plasticizers; additives imparting abrasion resistance including thermoplastic polyurethanes; stabilizers including UV stabilizers; antioxidants; reactive diluents; drying agents; adhesion promoters; fungicides; flame retardants; rheological adjuvants; color pigments or color pastes; and/or optionally also, to a small extent, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 30 wt.% of the total composition and preferably should not comprise more than 20 wt.% of the composition.

The presence of tougheners in the present composition can be advantageous to the debonding of the cured adhesive. Without intention to be bound by theory, the tougheners facilitate phase separation within the cured adhesive under the application of electrical potential. Good debonding results have, in particular, been obtained where the composition of the present invention comprises from 0 to 20 wt.%, for example from 0.5 to 20 wt.% or from 0.5 to 15 wt.%, based on the weight of the composition, of at least one toughener selected from: elastomer adducts and toughening rubber in the form of core-shell particles dispersed in the matrix polymer.

The term "*core shell rubber*" or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0°C and preferably a glass transition temperature (T_{g}) of -20°C or lower, more preferably -40°C or lower and even more preferably -60°C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly, without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have an average particle size (d50) of from 10nm to 300nm, for example from 50 nm to 250 nm: said particle size refers to the diameter or largest dimension of a particle in a distribution of particles and is measured via dynamic light scattering. For completeness, the present application does not preclude the presence of two or more types of core shell rubber (CSR) particles with different particle size distributions in the composition to provide a balance of key properties of the resultant cured product, including shear strength, peel strength and resin fracture toughness.

The core-shell rubber may be selected from commercially available products, examples of which include: Paraloid EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 551, MX553; and METABLEN SX-006 available from Mitsubishi Rayon.

As noted above, the composition of the present invention comprises from 0 to 20 wt.%, for example from 0.5 to 10 wt.% of filler. Said filler may be used independently of, or in combination with, the aforementioned toughener. The use of conductive and / or non-conductive fillers is envisaged but, in an embodiment, the filler included in the composition consists of or consists essentially of non-conductive particulate fillers.

As noted, the composition of the present invention may thus comprise electrically conductive particulate filler. The composition may, for instance, contain from 0 to 10 wt.% or from 0.5 to 5 wt.% of electrically conductive particles, based on the weight of the composition.

Broadly, there is no particular intention to limit the shape of the particles employed as conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as conductive fillers. However, such conductive fillers will conventionally have an average volume particle size, as measured by laser diffraction / scattering methods, of from 0.1 to 1500 µm, for example from 1 to 1250 µm.

Exemplary conductive particulate fillers include, but are not limited to: silver; copper; gold; palladium; platinum; nickel; gold or silver-coated nickel; carbon black; carbon fibre; graphite; aluminium; indium tin oxide; silver coated copper; silver coated aluminium; metallic coated glass spheres; metallic coated filler; metallic coated polymers; silver coated fibre; silver coated spheres; antimony doped tin oxide; conductive nanospheres; nano silver; nano aluminium; nano copper; nano nickel; carbon nanotubes; and, mixtures thereof. The use of particulate silver and / or carbon black as the conductive filler is preferred.

The composition of the present invention may further comprise electrically non-conductive particulate filler. The composition may, for instance, contain from 0 to 10 wt.% or from 0.5 to 10 wt.% of electrically non-conductive particles, based on the weight of the composition.

Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as non-conductive fillers. However, such non-conductive fillers will conventionally have an average volume particle size, as measured by laser diffraction / scattering methods, of from 0.1 to 1500 µm, for example from 1 to 1250 µm.

Exemplary non-conductive fillers include but are not limited to calcium carbonate, calcium oxide, calcium hydroxide (lime powder), fumed silica, amorphous silica, precipitated and/or pyrogenic silicic acid, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibres, wood flour, sawdust, cellulose, cotton, pulp, cotton, wood chips, chopped straw, chaff, ground walnut shells, and other chopped fibres. Short fibres such as glass fibres, glass filament, polyacrylonitrile, carbon fibres, Kevlar fibres, or polyethylene fibres can also be added.

The pyrogenic and/or precipitated silicic acids advantageously have a BET surface area from 10 to 90 m²/g. When they are used, they do not cause any additional increase in the viscosity of the composition according to the present invention but do contribute to strengthening the cured composition.

It is likewise conceivable to use pyrogenic and/or precipitated silicic acids having a higher BET surface area, advantageously from 100 to 250 m²/g as a filler: because of the greater BET surface area, the effect of strengthening the cured composition is achieved with a smaller proportion by weight of silicic acid.

Also suitable as non-conductive fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Non-conductive fillers which impart thixotropy to the composition may be preferred for many applications: such fillers are also described as rheological adjuvants, e.g. hydrogenated castor oil, fatty acid amides, or swellable plastics such as PVC.

The desired viscosity of the curable composition formed may be determinative of the amount of filler used. Having regard to that latter consideration, the total amount of fillers - both electrically conductive and non-conductive - present in the compositions should not prevent the composition from being readily applicable by the elected method of application to the composition to a substrate. For example, curable compositions which are intended to be extrudable from a suitable dispensing apparatus, such as a tube, should possess a viscosity of from 1000 to 150,000, preferably from 10,000 to 100,000 mPas.

A "*plasticizer*" for the purposes of this invention is a substance that decreases the viscosity of the composition and thus facilitates its processability. Herein the plasticizer may constitute up to 10 wt.% or up to 5 wt.%, based on the total weight of the composition, and is preferably selected from the group consisting of: diurethanes; ethers of monofunctional, linear or branched C4-C16 alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

"*Stabilizers*" for purposes of this invention are to be understood as antioxidants, thermal stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

It is noted that compounds having metal chelating properties may be used in the compositions of the present invention to help enhance the adhesion of the cured adhesive to a substrate surface. Further, also suitable for use as adhesion promoters are the acetoacetate-functionalized modifying resins sold by King Industries under the trade name K-FLEX XM-B301.

In order to enhance shelf life even further, it is often advisable to further stabilize the compositions of the present invention with respect to moisture penetration through using drying agents. A need also occasionally exists to lower the viscosity of an adhesive composition according to the present invention for specific applications, by using reactive diluent(s). The total amount of reactive diluents present will typically be from 0 to 10 wt.%, for example from 0 to 5 wt.%, based on the total weight of the composition.

The presence of solvents and non-reactive diluents in the compositions of the present invention is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said non-reactive diluents constitute *in toto* less than 10 wt.%, in particular less than 5 wt.% or less than 2 wt.%, based on the total weight of the composition.

### METHODS AND APPLICATIONS

To form the defined curable compositions, the ingredients are brought together and mixed. It is important that the mixing homogenously distributes the electrolyte - non-polymerizable compounds (2 above) - within the adhesive composition: such thorough and effective mixing can be determinative of a homogeneous distribution of the charged species within the polymer matrix obtained following curing and thereby of the provision of sufficient ionic conductivity to support an electrochemical reaction at the interface with the electrically conductive substrate.

As is known in the art, to form one component (1K) curable compositions, the elements of the composition are brought together and homogeneously mixed under conditions which inhibit or prevent the reactive components from reacting: such conditions would be readily comprehended by the skilled artisan. As such, it will often be preferred that the curative elements are not mixed by hand but are instead mixed by machine - a static or dynamic mixer, for example - in pre-determined amounts under anhydrous conditions without intentional photo-irradiation.

In accordance with the broadest process aspects of the present invention, the above described compositions are applied to the material layer(s) and then cured *in situ.* Prior to applying the compositions, it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as acetone, carbon tetrachloride ortrichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In some embodiments, the adhesion of the coating compositions of the present invention to the preferably pre-treated substrate may be facilitated by the application of a primer thereto. Indeed primer compositions may be necessary to ensure efficacious fixture and / or cure times of the adhesive compositions on inactive substrates. Whilst the skilled artisan will be able to select an appropriate primer, instructive references for the choice of primer include but are not limited to: US Patent No. 3,855,040; US Patent No. 4,731,146; US Patent No. 4,990,281; US Patent No. 5,811,473; GB 2502554; and, US Patent No. 6,852,193.

The compositions are then applied to the preferably pre-treated, optionally primed surfaces of the substrate by conventional application methods such as: brushing; roll coating; doctor-blade application; printing methods; and, spraying methods, including but not limited to air-atomized spray, air-assisted spray, airless spray and high-volume low-pressure spray.

As noted above, the present invention provides a bonded structure comprising: a first material layer having an electrically conductive surface; and, a second material layer having an electrically conductive surface, wherein the cured electrochemically debondable adhesive composition as defined hereinabove and in the appended claims is disposed between said first and second material layers. To produce such a structure, the adhesive composition may be applied to at least one internal surface of the first and / or second material layer and the two layers then subsequently contacted, optionally under the application of pressure, such that the electrically debondable adhesive composition is interposed between the two layers.

It is recommended that the compositions be applied to a surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

Given that the composition comprises a thermal initiator, it must be cured by elevating the temperature of the composition above the activation temperature of initiator. The activation temperature of course depends on the specific compounds present but the temperature required to ensure a desired curing rate and can be determined in the individual case by the skilled artisan, using simple preliminary tests if necessary. Without intention to limit the present invention, the complete curing of the applied curable compositions should typically occur at temperatures in the range of from 20°C to 150°C, preferably from 20°C to 120°C, and in particular from 45°C to 100°C. Where applicable, the temperature of the curable compositions may be raised above the mixing temperature and / or the application temperature using conventional means, including microwave induction. The present invention will be described with reference to the appended drawings in which:
Fig. 1a depicts a bonded structure in accordance with a first embodiment of the present invention.
Fig. 1b depicts a bonded structure in accordance with a second embodiment of the present invention.
Fig. 2a depicts the initial debonding of the structure of the first embodiment upon passage of a current across that structure.
Fig. 2b depicts the initial debonding of the structure of the second embodiment upon passage of a current across that structure.

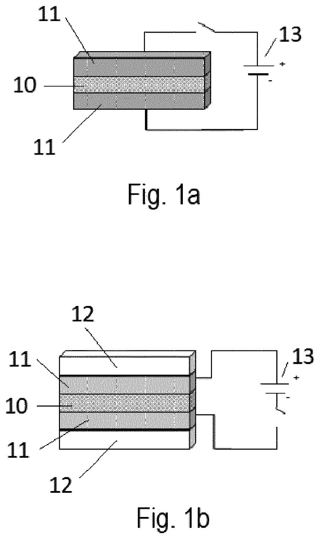

As shown in Figures 1a appended hereto, a bonded structure is provided in which a layer of cured adhesive (10) is disposed between two conductive substrates (11). A layer of non-conductive material (12) may be disposed on the conductive substrates (11) to form the more complex bonded structure as depicted in Fig. 1b. Each layer of conductive substrate (11) is in electrical contact with an electrical power source (13) which may be a battery or an AC-driven source of direct current (DC). The positive and negative terminals of that power source (13) are shown in one fixed position but the skilled artisan will of course recognize that the polarity of the system can be reversed.

The two conductive substrates (11) are shown in the form of a layer which may be constituted by *inter alia*: a metallic film; a metallic mesh or grid; deposited metal particles; a resinous material which is rendered conductive by virtue of conductive elements disposed therein; or, a conducting oxide layer. As exemplary conductive elements there may be mentioned silver filaments, single-walled carbon nanotubes and multi-walled carbon nanotubes. As exemplary conducting oxides there may be mentioned: doped indium oxides, such as indium tin oxide (ITO); doped zinc oxide; antimony tin oxide; cadmium stannate; and, zinc stannate. The selection of the conductive material aside, the skilled artisan will recognize that the efficacy of the debonding operation may be diminished where the conductive substrates (11) are in the form of a grid or mesh which offers limited contact with the layer of cured adhesive (10).

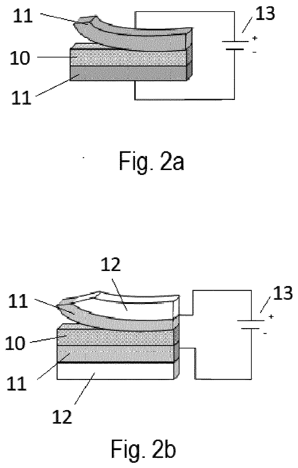

When an electrical voltage is applied between each conductive substrate (11), current is supplied to the adhesive composition (10) disposed there between. This induces electrochemical reactions at the interface of the substrates (11) and the adhesive composition, which electrochemical reactions are understood as oxidative at the positively charged or anodic interface and reductive at the negatively charged or cathodic interface. The reactions are considered to weaken the adhesive bond between the substrates allowing the easy removal of the debondable composition from the substrate. As depicted in Figures 2a and 2b, the debonding occurs at the positive interface, that interface between the adhesive composition (10) and the electrically conductive surface (11) that is in electrical contact with the positive electrode. By reversing current direction prior to separation of the substrates, the adhesive bond may be weakened at both substrate interfaces.

It is however noted that the composition of the adhesive layer (10) may be moderated so that debonding occurs at either the positive or negative interface or simultaneously from both. For some embodiments, a voltage applied across both surfaces so as to form an anodic interface and a cathodic interface will cause debonding to occur simultaneously at both the anodic and cathodic adhesive / substrate interfaces. In an alternative embodiment, reversed polarity may be used to simultaneously disbond both substrate / adhesive interfaces if the composition does not respond at both interfaces to direct current. The current can be applied with any suitable waveform, provided that sufficient total time at each polarity is allowed for debonding to occur. Sinusoidal, rectangular and triangular waveforms might be appropriate in this regard and may be applied from a controlled voltage or a controlled current source.

Without intention to limit the present invention, it is considered that the debonding operation may be performed effectively where at least one and preferably both of the following conditions are instigated: a) an applied voltage of from 0.5 to 200 V, for example from 10 to 100 V; and, b) the voltage being applied for a duration of from 1 second to 120 minutes, for example from 1 second to 60 minutes. Where the release of the conductive substrate from the cured adhesive is to be facilitated by the application of a force - exerted via a weight or a spring, for instance - the potential might only need to be applied for the order of seconds.

The following examples are illustrative of the present invention and are not intended to limit the scope of the invention in any way.

### EXAMPLES

The following materials were employed in the Examples:

| | |
|---|---|
| HEMA | Hydroxyethylmethacrylate monomer (HEMA) |
| Monomer Blend 1 | Polyurethane methacrylate (PUMA, Mw 2000-5000 g/mol) and isobornyl methacrylate |
| Saccharin | Accelerator, available from Sigma Aldrich |
| Acetyl phenyl hydrazine | Accelerator, available from Sigma Aldrich |
| Cumene hydroperoxide | Curing agent, available from Sigma Aldrich |
| 1-Ethyl-3-methylimidazolium methansulfonate: | Available from TCI America Inc. |
| 1-Ethyl-3-methylimidazolium chloride: | Available from TCI America Inc. |
| Aerosil 200: | Hydrophilic fumed silica, available from Evonik Industries. |
| Clearstrength^{®} XT100: | Core-shell toughening agent (methylmethacrylate-butadiene-styrene, MBS) available from Arkema Inc. |
| Estane 5715: | Polyester-type thermoplastic polyurethane (TPU) available from Lubrizol |
| Premix 18: | Tetrasodium EDTA solution (9 wt.%). |
| Premix 31: | Etidronic acid solution (5.5 wt.%) |

### Examples 1 to 3

Compositions were prepared in accordance with Table 1 herein below. The given ingredients were mixed in a speed mixer (1200 rpm; 1 minute) to ensure the formation of a homogenous mixture.

**Table 1**

| **Ingredient** | **Example 1 (wt.%)** | **Example 2 (wt.%)** | **Example 3 (wt.%)** |
|---|---|---|---|
| HEMA | 40.0 | 43.3 | 38.4 |
| Monomer Blend 1 | 38.9 | 41.9 | 37.0 |
| Saccharin | 1.3 | 1.2 | 0.9 |
| Cumene hydroperoxide | 1.0 | 1.0 | 0.7 |
| Acetyl phenyl hydrazine | 0.7 | 0.7 | 0.5 |
| Premix 18 Bulk | | | 0.1 |
| Premix 31 Bulk | | | 0.1 |
| EMIM MS | 10.7 | 10.0 | 10.2 |
| Aerosil 200 | 1.8 | 1.8 | 1.8 |
| Estane 5715 | 5.8 | | |
| Clearstrength XT100 | | | 10.2 |
| Total | 100.0 | 100.0 | 100.0 |

The test substrate was aluminium (AA6016), the surface of which had been cleaned with an ethyl acetate wipe. The substrate was provided at a thickness of 0.1 inch and cut into six 2.5 cm x 10 cm (1" x 4") samples for tensile testing. Tensile lap shear (TLS) test was performed at room temperature based upon ASTM D3163-01 *Standard Test Method for Determining Strength of Adhesively Bonded Rigid Plastic Lap-Shear Joints in Shear by Tension Loading.* The bond overlapping area for each stated substrate was 2.5 cm x 1.0 cm (1" x 0.4") with a bond thickness of 0.15 cm (60 mil).

The applied adhesive compositions were cured in the overlapping region by the application of a temperature of 100°C for 30 minutes. The bonded structures were then stored at 25°C, 20% relative humidity for 24 hours prior to initial tensile testing.

For each bonded substrate, tensile lap shear strength was investigated after said 24 hour storage period both prior and subsequent to the application of a constant potential of 30V across the adhesive layer for a duration of 20 minutes. The averaged results are documented in Table 2 herein below.

**Table 2**

| **Example** | **Initial Bond Strength (MPa)** | **Bond Strength after 30 V, 20 minutes (MPa)** |
|---|---|---|
| 1 | 5.3 ± 0.8 | 2.7 ± 0.5 |
| 2 | 8.2 ± 2.2 | 2.8 ± 0.9 |
| 3 | 4.3 ± 1.4 | 1.0 ± 0.7 |

In view of the foregoing description and example, it will be apparent to those skilled in the art that equivalent modifications thereof can be made without departing from the scope of the claims.

## Claims

1. A curable and electrochemically debondable one-component (1K) adhesive composition comprising, based on the weight of the composition:
from 40 to 90 wt.% of i) at least one ethylenically unsaturated non-ionic monomer;
from 0.1 to 30 wt.% of ii) non-polymerizable electrolyte;
from 0.1 to 10 wt.% of iii) at least one radical generating thermal initiator;
from 0 to 20 wt.% of iv) filler; and,
from 0 to 20 wt.% of v) toughener.

2. The curable and electrochemically debondable one-component (1K) adhesive composition according to claim 1, said composition comprising, based on the weight of the composition:
from 60 to 90 wt.%, preferably from 70 to 90 wt.% of i) said at least one ethylenically unsaturated non-ionic monomer;
from 1 to 20 wt.% of ii) said non-polymerizable electrolyte;
from 0.1 to 10 wt.%, preferably from 0.1 to 5 wt.% of iii) said at least one radical generating thermal initiator;
from 0 to 20 wt.%, preferably from 0.5 to 20 wt.% of iv) said filler; and,
from 0 to 20 wt.%, preferably from 0.5 to 20 wt.% of v) said toughener.

3. The curable and electrochemically debondable one-component (1K) adhesive composition according to claim 1 or claim 2, wherein (meth)acrylate monomers constitute at least 60 mole %, preferably at least 75 mole %, of the total molar amount of ethylenically unsaturated non-ionic monomers.

4. The curable and electrochemically debondable one-component (1K) adhesive composition according to any one of claims 1 to 3, wherein said (meth)acrylate monomers comprise C₁-C₆ hydroxyalkyl esters of (meth)acrylic acid.

5. The curable and electrochemically debondable one-component (1K) adhesive composition according to any one of claims 1 to 4, wherein said (meth)acrylate monomers comprise one or more oligomers selected from the group consisting of urethane (meth)acrylates, polyester (meth)acrylates and polyether (meth)acrylates.

6. The curable and electrochemically debondable one-component (1K) adhesive composition according to claim 5 comprising at least one urethane (meth) acrylate oligomer.

7. The curable and electrochemically debondable one-component (1K) adhesive composition according to any one of claims 1 to 6, wherein said non-polymerizable electrolyte is selected from the group consisting of 1-ethyl-3-methyl-1H-imidazol-3-um methansulfonate, 1-ethyl-3-methyl-1H-imidazol-3-um methyl sulfate, 1-hexyl-3-methylimidazolium 2-(2-fluoroanilino)-pyridinate, 1-hexyl-3-methylimidazolium imide, 1-butyl-1-methyl- pyrrolidinium 2-(2-fluoroanilino)-pyridinate, 1-butyl-1- methyl-pyrrolidinium imide, trihexyl (tetradecyl) phospholium 2-(2-fluoroanilino)-pyridinate, cyclohexyltrimethylammonium bis (trifluormethylsulfonyl) imide, di(2-hydroxyethyl) ammonium trifluoroacetate, N,N-dimethyl (2-hydroxyethyl) ammonium octanoate, methyltrioctylammonium bis (trifluoromethylsulfonyl) imide, N-ethyl-N-N-N-N-tetramethylguanidinium trifluoromethanesulfonate, guanidinium trifluoromethanesulfonate, 1-butyl-4-methylpyridinium bromide, 1-butyl-3-methylpyridinium tetrafluoroborate, 1-butyl-3-hydroxymethylpyridinium ethylsulfate, 1-butyl-1-methylpyrrolidinium bis (trifluoromethylsulfonyl) imide, 1-butyl-methylpyrrolidinium tris (pentafluoroethyl) trifluorophosphate, 3-methyl imidazolium ethylsulfate, 1-ethyl-3-methylimidazolium chloride, 1-ethyl-3-ethyl-methylimidazolium bromide, 1-butyl-3-methylimidazolium chloride, 1-hexyl-3-methylimidazolium chloride, 1-octyl-3-methylimidazolium chloride, 1-methyl-3-octylimidazolium chloride, 1-propyl-3-methylimidazolium iodide, 1-butyl-3-methylimidazolium tetrafluoroborate, 1-ethyl-3-methylimidazolium trifluoromethanesulfonate, 1-butyl-3-methylimidazolium trifluoromethanesulfonate, 1-butyl-3-methylimidazolium hexafluorophosphate, 1-butyl-2,3-dimethylimidazolium tetrafluoroborate, 1-butyl-2,3-dimethylimidazolium hexafluorophosphate, 1-butylimidazol, 1-methylimidazolium tetrafluoroborate, tetrabutylphosphonium tris (pentafluoroethyl) trifluorophosphate, trihexyl (tetradecyl) phosphonium tetrafluoroborate and mixtures thereof.

8. The curable and electrochemically debondable one-component (1K) adhesive composition according to claim 7 wherein said electrolyte is selected from the group consisting of 1-ethyl-3-methyl-1H-imidazol-3-um methansulfonate, 1-ethyl-3-methylimidazolium trifluoromethanesulfonate, 1-ethyl-3-methyl-1H-imidazol-3-um methyl sulphate and mixtures thereof.

9. The curable and electrochemically debondable one-component (1K) adhesive composition according to any one of claims 1 to 8, wherein said at least one radical generating thermal initiator is selected from the group consisting of: cumene hydroperoxide (CHP); para-menthane hydroperoxide; t-butyl hydroperoxide (TBH); t-butyl perbenzoate; t-butyl peroxy pivalate; di-t-butyl peroxide; t-butyl peroxy acetate; t-butyl peroxy-2-hexanoate; t-amyl hydroperoxide; 1,2,3,4-tetramethylbutyl hydroperoxide; benzoyl peroxide; dibenzoyl peroxide; 1,3-bis(t-butylperoxyisopropyl) benzene; diacetyl peroxide; butyl 4,4-bis (t-butylperoxy) valerate; p-chlorobenzoyl peroxide; t-butyl cumyl peroxide; di-t-butyl peroxide; dicumyl peroxide; 2,5-dimethyl-2,5-di-t-butylperoxyhexane; 2,5-dimethyl-2,5-di-t-butyl-peroxyhex-3-yne; and, 4-methyl-2,2-di-t-butylperoxypentane.

10. The curable and electrochemically debondable one-component (1K) adhesive composition according to any one of claims 1 to 9 further comprising up to 5 wt.%, based on the weight of the composition, of at least one cure accelerator.

11. The curable and electrochemically debondable one-component (1K) adhesive composition according to any one of claims 1 to 10 further comprising from 0.5 to 10 wt.%, based on the weight of the composition, of electrically non-conductive particulate filler.

12. The curable and electrochemically debondable one-component (1K) adhesive composition according to any one of claims 1 to 11 comprising from 0.5 to 15 wt.% of v) said toughener.

13. A bonded structure comprising
a first material layer having an electrically conductive surface;
a second material layer having an electrically conductive surface;
wherein a cured electrochemically debondable one component (1K) adhesive composition as defined in any one of claims 1 to 12 is disposed between the first and second material layers.

14. A method of debonding said bonded structure according to claim 13, the method comprising the steps of:
1) applying a voltage across both surfaces to form an anodic interface and a cathodic interface; and
2) debonding the surfaces,
wherein the voltage applied in step 1 is preferably from 0.5 to 200 V and it is preferably applied from 1 second to 60 minutes.
